# EUROPEAN PATENT SPECIFICATION

(11) **EP 3 492 789 B1**
(45) Date of publication and mention of the grant of the patent: **31.03.2021**
(21) Application number: 18207340.3
(22) Date of filing: 20.11.2018
(51) Int. Cl.: F16K 41/10, F16K 31/06

(54) **SOLENOID VALVE**
MAGNETVENTIL
SOUPAPE À SOLÉNOÏDE

(30) Priority: 30.11.2017 JP 2017230703
(43) Date of publication of application: 05.06.2019
(73) Proprietor: Advance Denki Kogyo Kabushiki Kaisha, Kasugai-shi, Aichi (JP)
(72) Inventor: HIDEOMI, Umekita, Kasugai-shi, Aichi (JP); TAKAHIRO, Miwa, Kasugai-shi, Aichi (JP)
(74) Representative: TBK

(56) References cited:
- EP-A1- 3 382 244
- WO-A1-02/25676
- WO-A1-2007/091300
- CN-A- 102 506 217
- DE-A1- 10 017 030
- DE-B- 1 169 242
- DE-U1-202013 104 062
- US-A- 5 326 070
- US-A- 5 775 670
- US-B1- 6 220 275
- US-B2- 8 028 970

## Description

The present invention relates to a solenoid valve in which a movable iron core which is excited by a coil member moves forwards and backwards with respect to a fixed iron core. In particular, the present invention relates to a solenoid valve in which the generation of noise can be suppressed.

Solenoid valves include a coil member, a fixed iron core and a movable iron core which are excited by energizing the coil member with electricity, and a valve body provided on the movable iron core. Solenoid valves operate so that when the fixed iron core and the movable iron core are excited, the movable iron core moves close to and away from the fixed iron core. In solenoid valves, the opening and closing of flow paths by the valve body is performed in accordance with the forward and backward movements of the movable iron core. Solenoid valves are advantageous in that the response speed thereof is faster as compared to movement by means of a motor or the like.

In solenoid valves, when the movable iron core moves in the direction of the fixed iron core, the movable iron core and the fixed iron core collide. The collision of the fixed iron core and the movable iron core generates noise and leads to an accelerated deterioration of the constituent members of the solenoid valve. Solenoid valves in which a cushion member is interposed between the fixed iron core and the movable iron core at the collision portion thereof are known (refer to, for example, JP 2010-25135 A). Since cushion members are made of an elastic body, such as rubber, shock is absorbed by the cushion member, protecting the members and suppressing the generation of noise.

This type of solenoid valve is suitably used for dialysis machines that control a fluid, such as a dialysate, during a dialysis treatment (refer to, for example, JP 2017-518472 A). However, a plurality (for example 20 to 30) of solenoid valves are used in a single dialysis machine. Thus, even if cushion members are interposed between the fixed iron cores and the movable iron cores, the operating noise of the solenoid valves is amplified and the noise suppression effect is insufficient.

Furthermore, in solenoid valves used in dialysis machines, since the forward and backward movements of the movable iron cores are frequently repeated, high driving durability is required. However, in conventional solenoid valves, since the movable iron core moves linearly, the outer peripheral portion of the movable iron core is supported on the inner wall portion of the housing of the coil member. Thus, the movable iron core repeatedly slides against the inner wall portion when moving and wears easily due to friction or the like.

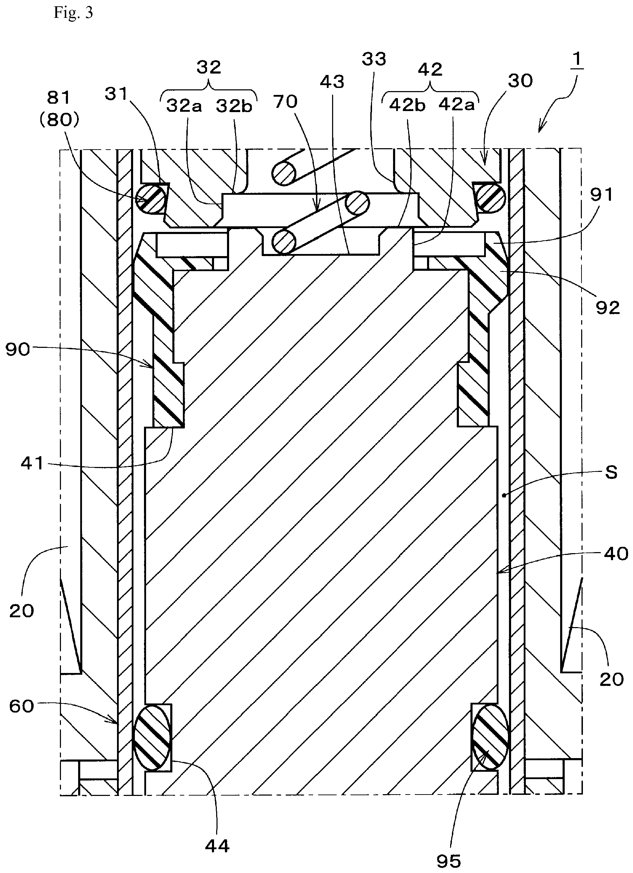

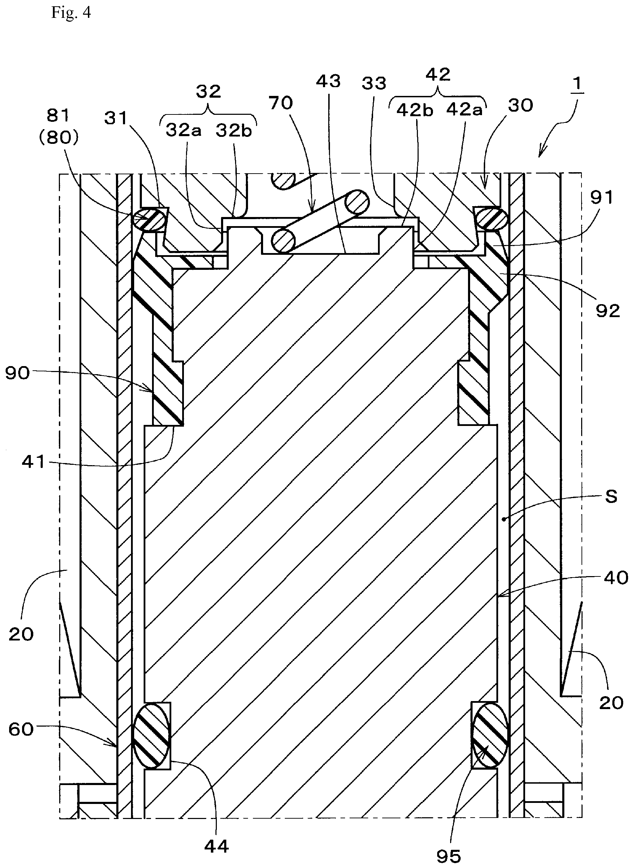

Document US 5 326 070 A discloses a solenoid valve. In an embodiment shown in Fig. 4 an annular cushion being integral with elastomeric strips extending in the axial direction of the moveable core is shown. In another embodiment shown in Fig. 3, two annular spacer elements are arranged about the movable core.

Document DE 100 17 030 A1 discloses a solenoid valve where no continuous contact between damper knobs and an inner wall of a cylinder is present.

Document US 8 028 970 B2 discloses a solenoid valve where abutment of a moveable iron core with a fixed iron core is prevented by means of a flange part. The flange part is arranged on an opposite end of the end of the moveable core directed to the fixed core. The flange part gets into abutment with a counter piece of a bobbin arranged about the moveable core and the fixed core before the moveable core gets into abutment with the fixed core.

The object of the present invention is to provide a solenoid valve in which the generation of noise can be more effectively suppressed by a simple structure and which has high driving durability.

In other words, a first invention provides a solenoid valve according to claim 1.

A second invention provides a solenoid valve according to claim 2.

A third invention provides the solenoid valve according to the second invention, wherein the cushion member is made of an annular body attached to a stepped part formed on an outer periphery of a distal end side of the fixed iron core and the first spacer member is provided with a protrusion which contacts the cushion member made of the annular body on an outer peripheral part thereof on the fixed iron core side.

A fourth invention provides the solenoid valve according to the second invention, wherein a recess is formed on a distal side of the fixed iron core and a protrusion, which approaches the inner peripheral surface of the recess when the movable iron core moves in the direction of the fixed iron core, is formed on the end of the movable iron core on the fixed iron core side.

Since the solenoid valve according to the first invention comprises a main body having a valve chamber in which a first flow path and a second flow path for inflow and outflow of a fluid communicate with each other via a valve seat, a coil member arranged in the main body for generating a predetermined magnetic field, a fixed iron core fixed to an inner peripheral side of the coil member in the main body and excited by the coil member, a movable iron core arranged opposite the fixed iron core on the inner peripheral side of the coil member in the main body and excited by the coil member to move close to and away from the fixed iron core, a valve body integrally provided with the movable iron core to open and close the valve seat, a cylindrical member made of a nonmagnetic material interposed between the coil member and the fixed iron core and the movable iron core, a biasing member arranged on the fixed iron core to continuously bias the movable iron core in the direction of the valve seat, a first spacer member made of a molded resin body which is attached to a fixed iron core side end of the movable iron core, is in continuous contact with the inner peripheral surface of the cylindrical member, and abuts against the fixed iron core when the movable iron core moves in the direction of the fixed iron core, and a second spacer member which is mounted on an outer periphery of the movable iron core on the valve body side and is in continuous contact with an inner peripheral surface of the cylindrical member together with the first spacer member so as to form a space between a side surface of the movable iron core and an inner peripheral surface of the cylindrical member, it is possible to effectively reduce impact force at the time of contact through an extremely simple structure and it is possible to suppress the deterioration of each of the constituent members due to the movement thereof. Thus, a higher noise suppression effect is obtained as compared with conventional solenoid valves, whereby noise generation can be effectively suppressed and driving durability can be greatly improved.

Since the solenoid valve according to the second invention comprises a main body having a valve chamber in which a first flow path and a second flow path for inflow and outflow of a fluid communicate with each other via a valve seat, a coil member arranged in the main body for generating a predetermined magnetic field, a fixed iron core fixed to an inner peripheral side of the coil member in the main body and excited by the coil member, a movable iron core arranged opposite the fixed iron core on the inner peripheral side of the coil member in the main body and excited by the coil member to move close to and away from the fixed iron core, a valve body integrally provided with the movable iron core to open and close the valve seat, a cylindrical member made of a nonmagnetic material interposed between the coil member and the fixed iron core and the movable iron core, a biasing member arranged on the fixed iron core to continuously bias the movable iron core in the direction of the valve seat, a cushion member made of an elastic body arranged at the portion of the fixed iron core that contacts with the movable iron core, a first spacer member made of a molded resin body which is attached to a fixed iron core side end of the movable iron core, is in continuous contact with the inner peripheral surface of the cylindrical member, and abuts against the cushion member when the movable iron core moves in the direction of the fixed iron core, and a second spacer member which is mounted on an outer periphery of the movable iron core of the valve body side and is in continuous contact with an inner peripheral surface of the cylindrical member together with the first spacer member so as to form a space between a side surface of the movable iron core and an inner peripheral surface of the cylindrical member, it is possible to effectively reduce impact force at the time of contact through an extremely simple structure and it is possible to suppress the deterioration each of the constituent members due to the movement thereof. Thus, a higher noise suppression effect is obtained as compared with conventional solenoid valves, whereby noise generation can be effectively suppressed and driving durability can be greatly improved.

According to the solenoid valve of the third invention, in the second invention, the cushion member is made of an annular body attached to a stepped part formed on an outer periphery of a distal end side of the fixed iron core and the first spacer member is provided with a protrusion which contacts the cushion member made of the annular body on an outer peripheral part thereof on the fixed iron core side. Thus, the contact area is reduced, whereby a higher noise suppression effect can be obtained.

According to the solenoid valve of the fourth invention, in the second invention, a recess is formed on a distal side of the fixed iron core and a protrusion, which approaches the inner peripheral surface of the recess when the movable iron core moves in the direction of the fixed iron core, is formed on the end of the movable iron core on the fixed iron core side. Thus, the impact force at the time of contact between the cushion member and the first spacer member is reduced, whereby a higher noise suppression effect can be obtained.

### BRIEF DESCRIPTION OF DRAWINGS

FIG. 1 is a cross-sectional view of the entirety of a solenoid valve according to an embodiment of the present invention.
FIG. 2 is a sectional view of the entirety of the solenoid valve of FIG. 1 when energized.
FIG. 3 is an enlarged sectional view of the vicinity of a contact portion between the fixed iron core and the movable iron core of the solenoid valve of FIG. 1 when not energized.
FIG. 4 is an enlarged sectional view of the vicinity of the contact portion between the fixed iron core and the movable iron core of the solenoid valve of FIG. 1 when energized.
FIG. 5 is an enlarged sectional view of the vicinity of a contact portion between the fixed iron core and the movable iron core of a solenoid valve according to another embodiment when not energized.
FIG. 6 is an enlarged sectional view of the vicinity of a contact portion between the fixed iron core and the movable iron core of a solenoid valve according to the other embodiment when energized.

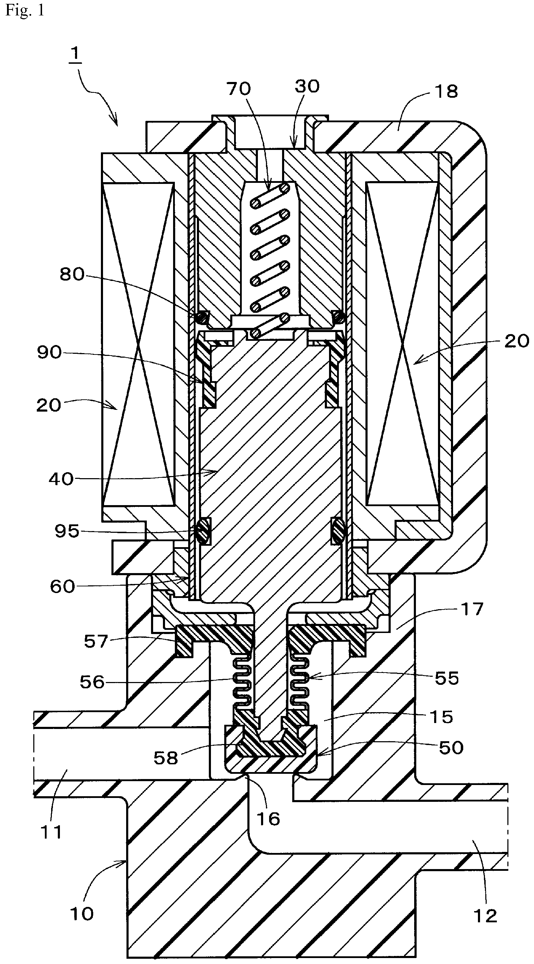

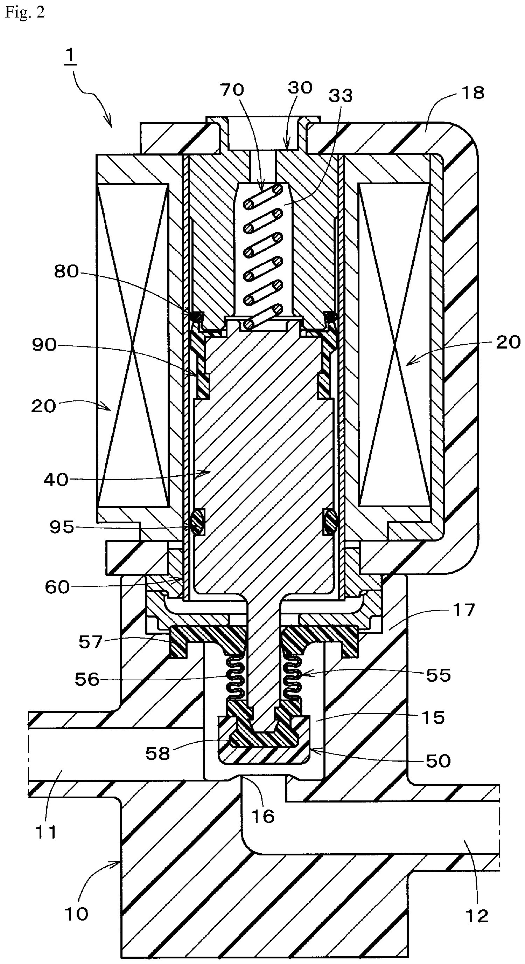

FIGS. 1 and 2 show a solenoid valve 1 according to an embodiment of the present invention. The solenoid valve 1 includes a main body 10, a coil member 20, a fixed iron core 30, a movable iron core 40, a valve body 50, a cylindrical member 60, a biasing member 70, a cushion member 80, a first spacer member 90, and a second spacer member 95. In the solenoid valve 1, the main body 10 and the valve body 50 are composed of materials having high corrosion resistance and chemical resistance, for example, fluororesins such as PTFE or PFA. Fluororesins can be easily processed into a desired shape by cutting or the like.

As shown in FIGS. 1 and 2, the main body 10 includes a first flow path 11 and a second flow path 12 for the introduction and discharge of a fluid. The main body 10 is a member which houses and protects the constituent elements of the solenoid valve. The main body 10 includes a valve chamber 15 in the interior thereof. The first flow path 11 and the second flow path 12 communicate in the valve chamber 15 via a valve seat 16. Reference numeral 17 in the drawings represents the flow path-side wall of the main body 10 surrounding the first flow path 11, the second flow path 12, and the valve chamber 15. Reference numeral 18 represents a coil-side wall of the main body 10 surrounding the coil member 20, which is described later, on the upper part of the flow-side wall 17.

The coil member 20 is a member which generates a predetermined magnetic field by energization from a power supply (not shown). The coil member 20 is composed of a helically-formed copper wire and is arranged in the main body 10, particularly in the coil-side wall 18.

The fixed iron core 30 is a member which is made of a known magnetic material and which is excited by the magnetic field generated by the coil member 20. As shown in FIGS. 1 and 2, the fixed iron core 30 is fixed to the inner peripheral side of the coil member 20 in the main body 10. In the illustrated examples, the fixed iron core 30 is mounted on the upper side of the coil-side wall 18 in the coil member 20. As shown in FIGS. 3 and 4, a stepped part 31 is formed on the outer periphery of the distal end of the fixed iron core 30. Furthermore, a recess 32 is formed in the distal side central portion of the fixed iron core 30. Reference numeral 33 shown in FIGS. 3 and 4 is a housing in which a biasing member 70, which is described later, is arranged.

The movable iron core 40 is a member which is made of the same known magnetic material as the fixed iron core 30 and which is excited by the magnetic field generated by the coil member 20. As shown in FIGS. 1 and 2, the movable iron core 40 is arranged opposite the fixed iron core 30 on the inner peripheral side of the coil member in the main body 10. The movable iron core 40 is magnetically attracted to the fixed iron core 30 by the excitation. Thus, the movable iron core 40 moves close to and away from the fixed iron core 30 depending on the energized state in which the coil member 20 generates a magnetic field or the non-energized state in which the magnetic field is dissipated. As shown in FIGS. 3 and 4, a protrusion 42 is formed on the end of the movable iron core 40 adjacent to the fixed iron core 30 and approaches the inner peripheral surface of the recess 32 of the fixed iron core 30 when the movable iron core 40 moves toward the fixed iron core 30. In FIGS. 3 and 4, reference numeral 41 represents a stepped attachment portion, which is described later, for mounting the first spacing member 90, reference numeral 43 represents a receiving part for supporting a biasing member 70, which is described later, arranged on the fixed iron core 30, and reference numeral 44 represents an attachment groove part, which is described later, for mounting the second spacer member 95.

As shown in FIGS. 1 and 2, the valve body 50 is a member that opens and closes the valve seat 16 provided in the valve chamber 15 to connect or disconnect the first flow path 11 and the second flow path 12. The valve body 50 may be integrally provided with the movable iron core 40. Thus, the valve body 50 opens and closes the valve seat 16 in accordance with the movement of the movable iron core 40. Furthermore, the valve body 50 may be integrally provided with a partitioning member 55 which partitions the valve chamber 15 and the space in which the fixed iron core 30 and the movable iron core 40 are arranged. The partitioning member 55 has a bellows-like elastic part 56 which expands and contracts in accordance with the advance and withdrawal of the valve body 50. The partitioning member 55 prevents fluid from entering the movable iron core 40 side. In the drawings, reference numeral 57 represents a first partition fixing part of the partitioning member 55 which is fixed to the flow-side wall 17 of the main body 10 and reference numeral 58 represents a second partition fixing part of the partitioning member 55 which is interposed and fixed between the movable iron core 40 and the valve body 50.

As shown in FIGS. 1 and 2, the cylindrical member 60 is interposed between the coil member 20 and the fixed iron core 30 and the movable iron core 40. Thus, contact of the coil member 20 with the fixed iron core 30 and the movable iron core 40 is prevented. Furthermore, the cylindrical member 60 is made of a nonmagnetic material. Thus, the cylindrical member 60 is not affected by the magnetic field generated by the coil member 20. Thus, the reciprocal movement of the movable iron core 40 is not influenced thereby.

As shown in FIGS. 1 and 2, the biasing member 70 continuously biases the movable iron core 40 in the direction of the valve seat 16. When the coil member 20 is in a non-energized state, the movable iron core 40 is maintained in a spaced state from the fixed iron core 30 by the biasing force of the biasing member 70. The biasing member 70 is formed from a known spring member. Further, the biasing member 40 is arranged inside the housing 33 of the fixed iron core 30, and one end thereof is supported by the receiving part 43 of the movable iron core 40. Thus, the biasing direction of the biasing member 70 does not shift laterally.

As shown in FIGS. 1 and 2, the cushion member 80 is arranged at the contact portion of the fixed iron core 30 and the movable iron core 40 and prevents contact (collision) between the fixed iron core 30 and the movable iron core 40. The cushion member 80 is formed from an elastic body composed of a known synthetic resin material such as a urethan resin or a silicone rubber. As shown in FIGS. 3 and 4, the cushion member 80 is an annular body (O-ring) 81 mounted on the stepped part 31 of the fixed iron core 30.

As shown in FIGS. 1 and 2, the first spacer member 90 continuously contacts the inner peripheral surface of the cylindrical member 60 and abuts against the cushion member 80 when the movable iron core 40 moves in the direction of the fixed iron core 30. The first spacer member 90 is mounted on the stepped attachment part 41 formed on the end of the movable iron core 40 on the fixed iron core 30 side. As shown in FIGS. 3 and 4, a protrusion 91 that contacts the cushion member 80, which is the annular body 81, is formed on the outer peripheral end of the first spacer member 90 on the fixed iron core 30 side. In FIGS. 3 and 4, reference numeral 92 represents an outer circumferential contact part which bulges from the outer peripheral side of the first spacer member 90 to protrude more outwardly than the outer peripheral surface of the movable iron core 40 so as to continuously contact the inner peripheral surface of the cylindrical member 60.

The first spacer member 90 is formed from a molded resin body. The material of which the first spacer member 90 is composed is a known resin material which is excellent in durability and moldability (processability), such as, for example, PTFE, PFA, or FEP. Since these resin materials are excellent in moldability, they can be easily processed into a desired shape by cutting or the like. Furthermore, since the first spacer member 90 is excellent in durability, it will not easily deteriorate even if it advances and withdraws together with the movable iron core 40 while continuously contacting the cylindrical member 60 or repeatedly contacts the cushion member 80. In particular, PTFE, PFA, and FEP listed above have less frictional resistance, so degradation thereof can be further suppressed.

As shown in FIGS. 1 and 2, the second spacer member 95 continuously contacts the inner peripheral surface of the cylindrical member 60 together with the first spacer member 90 and form a space S between the side surface of the movable iron core 40 and the inner peripheral surface of the cylindrical member 60. The second spacer member 95 is mounted on the attachment groove part 44 formed in the outer circumferential part of the movable iron core 40 on the valve body side. Like the first spacer member 90, the second spacer member 95 is made of a molded resin body made of a known resin material which is excellent in durability and moldability (processability). In particular, PTFE, PFA, or FEP having low friction properties are preferably used.

In the solenoid valve of the present invention, it is possible to omit the cushion member arranged on the fixed iron core and adopt a configuration in which the first spacer member contacts the fixed iron core when the movable iron core moves toward the fixed iron core.

The operation of the solenoid valve 1 will be described by way of example. First, the solenoid valve 1 shown in FIGS. 1 and 3 represents a normal state (when not energized) in which a current is not supplied to the coil member 20. When not energized, in the solenoid valve 1, the movable iron core 40 is biased in the direction of the valve seat 16 by the biasing member 70. Thus, the movable iron core 40 is maintained in a spaced state from the fixed iron core 30. As a result, the valve body 50, which is moved forward or backward together with the movable iron core 40, closes the valve seat 16, disconnects the first flow path 11 from the second flow path 12, and prevents the circulation of fluid.

Next, the solenoid valve 1 shown in FIGS. 2 and 4 represents an operative state (energized state) in which the coil member 20 is supplied with electricity. When energized, in the solenoid valve 1, a magnetic field is generated by the coil member 20, and the fixed iron core 30 and the movable iron core 40 are excited. Thus, the movable iron core 40 is magnetically attracted to the fixed iron core 30 and is moved toward the fixed iron core 30 side against the biasing force of the biasing member 70.

The first spacer member 90 is mounted on the upper side (the fixed iron core 30 side) of the movable iron core 40 and the second spacer member 95 is mounted on the lower side (the valve body 50 side) of the movable iron core 40. Specifically, the movable iron core 40 is supported on the upper side and lower side thereof with respect to the cylindrical member 60. Thus, the movable iron core 40 moves with the space S formed between it and the cylindrical member 60. Therefore, the movable iron core 40 moves linearly without contacting the cylindrical member 60.

At this time, only the first spacer member 90 and the second spacer member 95 contact the cylindrical member 60. Further, the first spacer member 90 and the second spacer member 95 are formed from molded resin bodies composed of a synthetic material having high durability and low friction such as PTFE, PFA, or FEP. In particular, the contact of the movable iron core 40 with the cylindrical member 60 when the movable iron core 40 advances and withdraws is limited to a very small range with low friction. Thus, the movable iron core 40 can move extremely smoothly.

Furthermore, since the contact portion is small and the friction is low, the burden on each component due to the contact (sliding) is greatly reduced. In particular, since the first spacer member 90 and the second spacer member 95 are composed of a material having high durability, the deterioration accompanying the movement of the movable iron core 40 is suppressed, and the driving durability thereof is greatly improved. As a result, it is possible to suitably accommodate the frequent movement of the movable iron core 40.

Further, since the movable iron core 40 moves smoothly with low friction due to the first spacer member 90 and the second spacer member 95, the movement noise generated during movement is reduced. Furthermore, the first spacer member 90 mounted on the upper side of the movable iron core 40 contacts (collides with) the fixed iron core 30 when the movable iron core 40 moves toward the fixed iron core 30, whereby direct contact (collision) between the fixed iron core 30 and the movable iron core 40 is prevented. Since the first spacer member 90 is a molded resin body, even if the first spacer member 90 and the fixed iron core 30 contact (collide) when the movable iron core 40 moves toward the fixed iron core 30, the collision noise is absorbed. Thus, the generation of noise can be reduced as compared with the prior art in which the movement noise and collision noise of the movable iron core 40 are reduced.

In particular, by mounting the cushion member 80 on the fixed iron core 30, when the movable iron core 40 moves toward the fixed iron core 30, the cushion member 80 and the first spacer member 90 contact (collide). Since the cushion member 80 and the first spacer member 90 are both composed of a resin material the impact force during contact is further reduced as compared to metal-on-metal contact or contact between resin and metal. Thus, the noise reduction effect is further improved, and noise generation is greatly suppressed. In this embodiment, since contact is made only between the annular body (O-ring) 81 and the protruding part 91 of the first spacer member 90, the contact area is reduced and a higher noise suppression effect is obtained.

Further, the recess 32 is formed in the fixed iron core 30 and the protrusion 42, which approaches the inner peripheral surface 32a of the recess 32 when the movable iron core 40 moves, is formed on the movable iron core 40. As shown in FIG. 4, the outer circumferential surface 42a of the protrusion 42 of the movable iron core 40a approaches the inner peripheral surface 32a of the recess 32 before the distal end portion 42b of the protrusion 42 and the bottom surface 32b of the recess 32 come close to each other. Thus, along with the approach of the movable iron core 40 toward the fixed iron core 30, a magnetically attracting force is generated in a direction different from the moving direction (vertical direction) of the movable iron core 40 (substantially horizontal direction). As a result, the magnetically attracting force in the moving direction with respect to the movable iron core 40 is weakened, and a braking effect is generated in which the movement of the movable iron core 40 is suppressed. Therefore, the impact force at the time of contact between the cushion member 80 and the first spacer member 90 is further reduced, and a higher noise suppression effect can be obtained.

By moving the movable iron core 40 toward the fixed iron core 30 side, the valve body 50, which is moved together with the movable iron core 40, opens the valve seat 16 to connect the first flow path 11 and the second flow path 12 and distributes fluid. By stopping the energization of the coil member 20, the magnetization of the fixed iron core 30 and the movable iron core 40 is dissipated, the valve seat 16 is closed, and the solenoid valve 1 returns to the normal state (non-energized state) shown in FIGS. 1 and 3. Thereafter, in the solenoid valve 1, by appropriately repeating the energization of the coil member 20 and stopping of the energization, the opening and closing of the valve seat 16 is repeated to control the flowing and stoppage of the fluid.

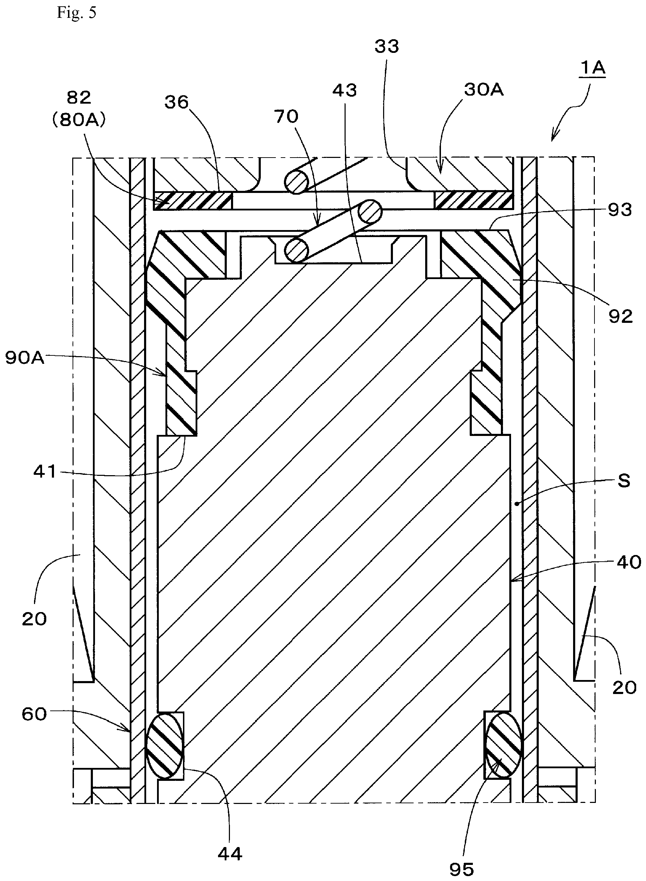

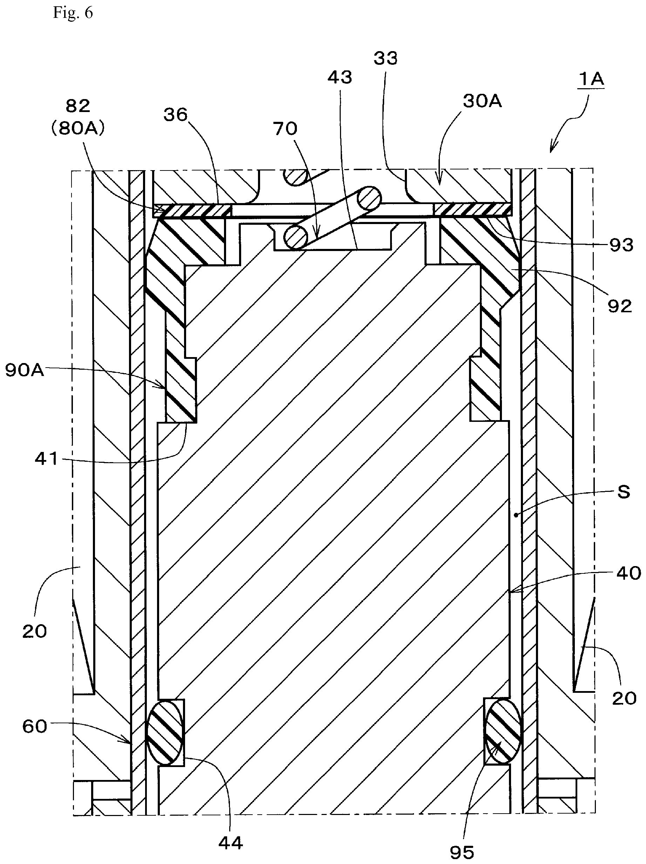

FIGS. 5 and 6 are enlarged sectional views of the vicinity of the contact portion between a fixed iron core 30A and the movable iron core 40 of a solenoid valve 1A according to another embodiment. In the description below, components having the same reference numerals as those of the solenoid valve 1 have the same configuration and explanation thereof is omitted.

The distal side (movable iron core 40 side) of the fixed iron core 30A is composed of a flat part 36. A cushion member 80A made of a sheet body 82 is arranged on the flat part 36. Like the aforementioned cushion member 80 (annular body 81), the cushion member 80A is made of an elastic body composed of a known synthetic resin material such as a urethane resin or a silicone rubber.

A first spacer member 90A which contacts the corresponding cushion member 80A made of a sheet body 82 is mounted on the movable iron core 40 of the solenoid valve 1A. The first spacer member 90A includes an outer peripheral contact part 92 which continuously contacts the inner peripheral surface of the cylindrical member 60, and a planar upper surface contact part 93 which is arranged closer to the fixed iron core 30A than the end portion of the movable iron core 40 on the fixed iron core 30A side (the end portion of the receiving part 43 in the illustrated example) and contacts the cushion member 80A. Like the aforementioned first spacer member 90, the first spacer member 90A is made of a molded resin body.

In the solenoid valve 1A according to the other embodiment, since the shapes of the fixed iron core 30A, cushion member 80A, and first spacer member 90A are simplified, the solenoid valve 1A is easy to produce and a reduction in cost can be achieved. Furthermore, like the solenoid valve 1, in the solenoid valve 1A, the cushion member 80A and the first spacer member 90A are both made of a resin material. Thus, the impact force at the time of contact is reduced due to the contact between the resins and an excellent noise suppression effect is obtained.

As illustrated and described above, in the solenoid valve of the present invention, the movable iron core is supported with respect to the cylindrical member by the first spacer member and the second spacer member via the space. Thus, the movable iron core moves smoothly without directly contacting the cylindrical member. Further, since the first spacer member and the second spacer member, which contact the cylindrical member, are resin molded bodies having high durability and low friction, the movable iron core can slide with low friction and in a state in which the contact area is minimized. As a result, the degradation of the constituent elements of the solenoid valve due to movement is suppressed and the noise generated when the movable iron core moves is suppressed.

Furthermore, in the solenoid valve of the present invention, a cushion member made of an elastic body is arranged at the contact portion of the fixed iron core with the movable iron core and a first spacer member made of a molded resin body, which contacts the cushioning member when the movable iron core moves in the direction of the fixed iron core, is arranged at the end of the movable iron core on the fixed iron core side. Thus, the contact when the movable iron core moves is merely between resin bodies. Metal-on-metal contact and contact between a resin body and metal is prevented. As a result, it is possible to effectively reduce the impact force at the time of contact by a very simple structure, and it is possible to effectively suppress the generation of noise and obtain a high noise suppression effect as compared with the prior art.

### INDUSTRIAL APPLICABILITY

As described above, in the solenoid valve of the present invention, it is possible to obtain a high noise suppression effect and excellent durability by an extremely simple structure. Thus, the solenoid valve of the present invention is extremely promising as a substitute for conventional solenoid valves in fields requiring noise suppression and long-term repetitive use, such as dialysis equipment.

### REFERENCE SIGNS LIST

- 1, 1A: solenoid valve
- 10: main body
- 11: first flow path
- 12: second flow path
- 15: valve chamber
- 16: valve seat
- 17: flow-side wall
- 18: coil-side wall
- 20: coil member
- 30, 30A: fixed iron core
- 31: stepped part
- 32: recess
- 32a: inner peripheral surface of the recess
- 32b: bottom of the recess
- 33: housing
- 36: flat part
- 40: movable iron core
- 41: stepped attachment part
- 42: protrusion
- 42a: outer peripheral surface of the protrusion
- 42b: tip of the protrusion
- 43: receiving part
- 44: attachment groove part
- 50: valve body
- 55: partitioning member
- 56: elastic part
- 57: first partition fixing part
- 58: second partition fixing part
- 60: cylindrical member
- 70: biasing member
- 80, 80A: cushion member
- 81: annular body
- 82: sheet body
- 90, 90A: first spacer member
- 91: protrusion part
- 92: outer circumferential contact part
- 93: upper surface contact part
- 95: second spacer member
- S: space

[OBJECT] To provide a solenoid valve having high driving durability in which the generation of noise can be effectively suppressed with a simple configuration.

[SOLVING MEANS] Provided is a solenoid valve including a cylindrical member 60 made of a nonmagnetic material interposed between a coil member 20 and a fixed iron core 30 and a movable iron core 40, a biasing member 70 which continuously biases the movable iron core in the direction of a valve seat, a cushion member 80 made of an elastic body arranged at the portion of the fixed iron core that contacts with the movable iron core, a first spacer member 90 made of a molded resin body which is attached to a fixed iron core side end of the movable iron core, is in continuous contact with the inner peripheral surface of the cylindrical member, and abuts against the cushion member when the movable iron core moves in the direction of the fixed iron core, and a second spacer member 95 which is mounted on an outer periphery of the movable iron core on the valve body side and is in continuous contact with an inner peripheral surface of the cylindrical member together with the first spacer member so as to form a space S between a side surface of the movable iron core and an inner peripheral surface of the cylindrical member.

## Claims

1. A solenoid valve (1), comprising:
a main body (10) having a valve chamber (15) in which a first flow path (11) and a second flow path (12) for inflow and outflow of a fluid communicate with each other via a valve seat (16),
a coil member (20) arranged in the main body (10) for generating a predetermined magnetic field,
a fixed iron core (30) fixed to an inner peripheral side of the coil member (20) in the main body (10) and configured to be excited by the coil member (20),
a movable iron core (40) arranged opposite the fixed iron core (30) on the inner peripheral side of the coil member (20) in the main body (10) and excited by the coil member (20) to move close to and away from the fixed iron core (30),
a valve body (50) integrally provided with the movable iron core (40) to open and close the valve seat (16),
a cylindrical member (60) made of a nonmagnetic material interposed between the coil member (20) and the fixed iron core (30) and the movable iron core (40),
a biasing member (70) arranged on the fixed iron core (30) to continuously bias the movable iron core (40) in the direction of the valve seat (16),
a first spacer member (90, 90A) made of a molded resin body which is attached to a fixed iron core side end of the movable iron core (40), is in continuous contact with the inner peripheral surface of the cylindrical member (60), and configured to abut against the fixed iron core (30) when the movable iron core (40) moves in the direction of the fixed iron core (30), and
a second spacer member (95) which is mounted on an outer periphery of the movable iron core (40) on the valve body (50) side and is in continuous contact with an inner peripheral surface of the cylindrical member (60) together with the first spacer member (90) so as to form a space (S) between a side surface of the movable iron core (40) and an inner peripheral surface of the cylindrical member (60),
**characterized in that**
the first spacer member (90, 90A) is mounted on a stepped attachment part (41) formed on the end of the movable iron core (40) on the side of the fixed iron core (30), and
the first spacer member (90, 90A) has an outer circumferential contact part (92) which bulges from the outer peripheral side of the first spacer member (90, 90A) to protrude more outwardly than the outer peripheral surface of the movable iron core (40) so as to continuously contact the inner peripheral surface of the cylindrical member (60).

2. The solenoid valve according to claim 1, further comprising a cushion member (80A) made of an elastic body arranged at the portion of the fixed iron core (30) that is configured to contact the movable iron core (40),
wherein the first spacer member (90A) is configured to abut against the cushion member (80A) when the movable iron core (40) moves in the direction of the fixed iron core (30).

3. The solenoid valve (10A) according to claim 2, wherein the cushion member (80A) is made of an annular body attached to a stepped part (41) formed on an outer periphery of a distal end side of the fixed iron core (30) and the first spacer member (90A) is provided with a protrusion (91) which contacts the cushion member (80A) made of the annular body on an outer peripheral part thereof on the fixed iron core (30) side.

4. The solenoid valve (10A) according to claim 2, wherein a recess (32) is formed on a distal side of the fixed iron core (30) and a protrusion (42), which approaches the inner peripheral surface (32a) of the recess when the movable iron core (40) moves in the direction of the fixed iron core (30), is formed on the end of the movable iron core (40) on the fixed iron core (30) side.

## Patentansprüche

1. Solenoidventil (1), mit:
einem Hauptkörper (10) mit einer Ventilkammer (15), in der ein erster Strömungspfad (11) und ein zweiter Strömungspfad (12) für einen Zu- und Abfluss eines Fluids über einen Ventilsitz (16) miteinander in Verbindung stehen,
einem in dem Hauptkörper (10) angeordneten Spulenelement (20) zur Erzeugung eines vorbestimmten Magnetfeldes,
einem festen Eisenkern (30), der an einer inneren Umfangsseite des Spulenelements (20) in dem Hauptkörper (10) befestigt ist und so konfiguriert ist, dass er durch das Spulenelement (20) erregt wird,
einem beweglichen Eisenkern (40), der gegenüber dem festen Eisenkern (30) an der inneren Umfangsseite des Spulenelements (20) in dem Hauptkörper (10) angeordnet ist und durch das Spulenelement (20) erregt wird, um sich nahe an den festen Eisenkern (30) heranzubewegen und sich von diesem zu entfernen,
einem Ventilkörper (50), der einstückig mit dem beweglichen Eisenkern (40) bereitgestellt ist, um den Ventilsitz (16) zu öffnen und zu schließen,
einem zylindrischen Element (60) aus einem nichtmagnetischen Material, das zwischen dem Spulenelement (20) und dem festen Eisenkern (30) und dem beweglichen Eisenkern (40) angeordnet ist,
einem Vorspannelement (70), das auf dem festen Eisenkern (30) angeordnet ist, um den beweglichen Eisenkern (40) kontinuierlich in die Richtung des Ventilsitzes (16) vorzuspannen,
einem ersten Abstandhalterelement (90, 90A), das aus einem geformten Harzkörper hergestellt ist, der an einem Seitenende des festen Eisenkerns des beweglichen Eisenkerns (40) angebracht ist, in kontinuierlicher Berührung mit der inneren Umfangsfläche des zylindrischen Elements (60) steht und so konfiguriert ist, dass er an dem festen Eisenkern (30) in Anlage ist, wenn sich der bewegliche Eisenkern (40) in die Richtung des festen Eisenkerns (30) bewegt, und
einem zweiten Abstandhalterelement (95), das an einem Außenumfang des beweglichen Eisenkerns (40) an der Seite des Ventilkörpers (50) angebracht ist und zusammen mit dem ersten Abstandhalterelement (90) in kontinuierlicher Berührung mit einer inneren Umfangsfläche des zylindrischen Elements (60) steht, um einen Raum (S) zwischen einer Seitenfläche des beweglichen Eisenkerns (40) und einer inneren Umfangsfläche des zylindrischen Elements (60) auszubilden,
**dadurch gekennzeichnet, dass**
das erste Abstandhalterelement (90, 90A) an einem abgestuften Befestigungsteil (41) angebracht ist, das an dem Ende des beweglichen Eisenkerns (40) an der Seite des festen Eisenkerns (30) ausgebildet ist, und
das erste Abstandhalterelement (90, 90A) ein äußeres Umfangsberührungsteil (92) aufweist, das sich von der äußeren Umfangsseite des ersten Abstandhalterelements (90, 90A) wölbt, um weiter nach außen als die äußere Umfangsfläche des beweglichen Eisenkerns (40) vorzustehen, so dass es kontinuierlich die innere Umfangsfläche des zylindrischen Elements (60) berührt.

2. Solenoidventil (1A), nach Anspruch 1, außerdem mit:
einem Dämpfungselement (80A) aus einem elastischen Körper, das an dem Abschnitt des festen Eisenkerns (30) angeordnet ist, der konfiguriert ist, den beweglichen Eisenkern (40) zu berühren,
wobei das erste Abstandhalterelement (90A) so konfiguriert ist, dass es gegen das Dämpfungselement (80A) in Anlage ist, wenn sich der bewegliche Eisenkern (40) in die Richtung des festen Eisenkerns (30) bewegt.

3. Solenoidventil (10A) nach Anspruch 2, wobei das Dämpfungselement (80A) aus einem ringförmigen Körper hergestellt ist, der an einem abgestuften Teil (41) befestigt ist, das an einem äußeren Umfang einer distalen Endseite des festen Eisenkerns (30) ausgebildet ist, und das erste Abstandselement (90A) mit einem Vorsprung (91) bereitgestellt ist, der das aus dem ringförmigen Körper hergestellte Dämpfungselement (80A) an einem äußeren Umfangsteil davon an der Seite des festen Eisenkerns (30) berührt.

4. Solenoidventil (10A) nach Anspruch 2, wobei an einer distalen Seite des festen Eisenkerns (30) eine Ausnehmung (32) ausgebildet ist, und an dem Ende des beweglichen Eisenkerns (40) auf der Seite des festen Eisenkerns (30) ein Vorsprung (42) ausgebildet ist, der sich der inneren Umfangsfläche (32a) der Ausnehmung annähert, wenn sich der bewegliche Eisenkern (40) in die Richtung des festen Eisenkerns (30) bewegt.

## Revendications

1. Soupape à solénoïde (1) comprenant :
un corps principal (10) ayant une chambre de soupape (15) dans laquelle une première trajectoire d'écoulement (11) et une seconde trajectoire d'écoulement (12) pour l'entrée et la sortie d'un fluide communiquent entre elles via un siège de soupape (16),
un élément de bobine (20) agencé dans le corps principal (10) pour générer un champ magnétique prédéterminé,
un noyau en fer fixe (30) fixé sur un côté périphérique interne de l'élément de bobine (20) dans le corps principal (10) et configuré pour être excité par l'élément de bobine (20),
un noyau en fer mobile (40) agencé à l'opposé du noyau en fer fixe (30) sur le côté périphérique interne de l'élément de bobine (20) dans le corps principal (10) et excité par l'élément de bobine (20) pour se rapprocher et s'éloigner du noyau en fer fixe (30),
un corps de soupape (50) prévu, de manière solidaire, avec le noyau en fer mobile (40) pour ouvrir et fermer le siège de soupape (16),
un élément cylindrique (60) réalisé avec un matériau non magnétique intercalé entre l'élément de bobine (20) et le noyau en fer fixe (30) et le noyau en fer mobile (40),
un élément de sollicitation (70) agencé sur le noyau en fer fixe (30) pour solliciter, de manière continue, le noyau en fer mobile (40) dans la direction du siège de soupape (16),
un premier élément d'espacement (90, 90A) réalisé avec un corps en résine moulé qui est fixé sur une extrémité du côté du noyau en fer fixe du noyau en fer mobile (40), est en contant continu avec la surface périphérique interne de l'élément cylindrique (60) et configuré pour venir en butée contre le noyau en fer fixe (30) lorsque le noyau en fer mobile (40) se déplace dans la direction du noyau en fer fixe (30), et
un second élément d'espacement (95) qui est monté sur une périphérie externe du noyau en fer mobile (40) du côté du corps de soupape (50) et est en contact continu avec une surface périphérique interne de l'élément cylindrique (60) conjointement avec le premier élément d'espacement (90) afin de former un espace (S) entre une surface latérale du noyau en fer mobile (40) et une surface périphérique interne de l'élément cylindrique (60),
**caractérisée en ce que** :
le premier élément d'espacement (90, 90A) est monté sur une partie de fixation étagée (41) formée sur l'extrémité du noyau en fer mobile (40) du côté du noyau en fer fixe (30), et
le premier élément d'espacement (90, 90A) a une partie de contact circonférentielle externe (92) qui se renfle à partir du côté périphérique externe du premier élément d'espacement (90, 90A) pour faire davantage saillie vers l'extérieur que la surface périphérique externe du noyau en fer mobile (40) afin d'être en contact continu avec la surface périphérique interne de l'élément cylindrique (60).

2. Soupape à solénoïde selon la revendication 1, comprenant en outre :
un élément amortisseur (80A) réalisé avec un corps élastique agencé au niveau de la partie du noyau en fer fixe (30) qui est configuré pour être en contact avec le noyau en fer mobile (40)
dans laquelle le premier élément d'espacement (90A) est configuré pour venir en butée contre l'élément amortisseur (80A) lorsque le noyau en fer mobile (40) se déplace dans la direction du noyau en fer fixe (30).

3. Soupape à solénoïde (10A) selon la revendication 2, dans laquelle l'élément amortisseur (80A) est réalisé avec un corps annulaire fixé sur une partie étagée (41) formée sur une périphérie externe d'un côté d'extrémité distale du noyau en fer fixe (30) et le premier élément d'espacement (90A) est prévu avec une saillie (91) qui est en contact avec l'élément amortisseur (80A) réalisé avec le corps annulaire sur sa partie périphérique externe du côté du noyau en fer fixe (30).

4. Soupape à solénoïde (10A) selon la revendication 2, dans laquelle un évidement (32) est formé sur un côté distal du noyau en fer fixe (30) et une saillie (42), qui s'approche de la surface périphérique interne (32a) de l'évidement lorsque le noyau en fer mobile (40) se déplace dans la direction du noyau en fer fixe (30), est formée sur l'extrémité du noyau en fer mobile (40) du côté du noyau en fer fixe (30).
